# FASCICULE DE BREVET EUROPEEN

(11) **EP 2 885 568 B1**
(45) Date de publication et mention de la délivrance du brevet: **07.03.2018**
(21) Numéro de dépôt: 13747414.4
(22) Date de dépôt: 09.08.2013
(51) Int. Cl.: F16L 41/02, F16L 59/14, F16L 53/00

(54) **RACCORD INTERMÉDIAIRE DE CONNEXION D'ÉLÉMENTS DE CONDUITE RIGIDE DE TRANSPORT DE FLUIDE, RÉSEAU DE CONDUITES ET PROCÉDÉ D'ASSEMBLAGE ASSOCIÉS**
ZWISCHENKOPPLUNG ZUM VERBINDEN VON ELEMENTEN EINES STARREN ROHRS ZUR FÖRDERUNG EINER FLÜSSIGKEIT SOWIE ZUGEHÖRIGES ROHRNETZWERK UND MONTAGEVERFAHREN
INTERMEDIATE COUPLING FOR CONNECTING RIGID-PIPE ELEMENTS FOR CONVEYING A FLUID, AND ASSOCIATED PIPE NETWORK AND ASSEMBLY METHOD

(30) Priorité: 20.08.2012 FR 1257879
(43) Date de publication de la demande: 24.06.2015
(73) Titulaire: Technip France, 92400 Courbevoie (FR)
(72) Inventeur: ESPINASSE, Philippe, F-76420 Bihorel (FR); RAGEOT, Olivier, 75009 Paris (FR)
(74) Mandataire: Lavoix
(86) Numéro de dépôt international: PCT/EP2013/066740
(87) Numéro de publication internationale: WO 2014/029644

(56) Documents cités:
- EP-A2- 1 953 444
- WO-A1-02/16732
- WO-A1-94/04865
- DE-A1- 3 300 443
- DE-U1- 9 000 710
- US-A- 4 069 409
- US-A1- 2008 307 737

## Description

La présente invention concerne un réseau de conduites de transport de fluide, destiné à être immergé dans une étendue d'eau, selon le préambule de la revendication 1.

Un tel raccord est destiné notamment à être utilisé dans un réseau de conduites sous-marines de transport d'hydrocarbures. US 4 069 409 A, EP 1 953 444 A, WO 02/16732 A, WO 94/04865 A, US 2008/307737 A et DE 33 00 443 A décrivent des exemples de raccords.

Le réseau de conduites est immergé dans une étendue d'eau, en particulier à une grande profondeur. Ce réseau est par exemple destiné à raccorder entre elles différentes têtes de puits, ou différents embouts de raccordement de pipelines (désignés généralement par l'acronyme anglais « PLET » pour «Pipe Line End Terminations ») pour collecter le fluide prélevé dans différents puits d'un champ pétrolier sous marin et le ramener à la surface à travers au moins une colonne montante (désignée par le terme anglais « riser »).

Dans certains cas, notamment aux grandes profondeurs, les températures de l'étendue d'eau dans laquelle le réseau de conduites est immergé peuvent être faibles, par exemple de l'ordre de quelques degrés Celsius.

Dans ce cas, les fluides transportés à travers le réseau de conduites sont susceptibles de devenir très visqueux. Ceci réduit le débit de fluide extrait hors de l'installation.

Dans le pire des cas, des bouchons d'hydrates peuvent se former et bloquer totalement la récupération de fluide à travers une partie de l'installation.

Pour pallier ce problème, il est connu de chauffer le fluide circulant dans les conduites, soit en faisant passer un courant électrique directement à travers le tube métallique guidant le fluide, soit en fournissant une ligne électrique de chauffage disposée entre un tube métallique interne contenant le fluide et un tube métallique externe. Cette dernière configuration est désignée par le terme anglais «Electrical Tracing Heated Pipe-In-Pipe » ou « ETH-PIP »

Les lignes électriques de chauffage sont relativement simples à installer dans l'espace annulaire entre le tube interne et le tube externe d'un élément de conduite rigide linéaire. Une couche de matériau isolant thermiquement de bonne qualité, par exemple formée par un aérogel, est également introduite dans l'espace annulaire, pour fournir une bonne isolation thermique entre l'extérieur de l'élément de conduite et le fluide circulant dans l'élément de conduite.

Dans certaines configurations, un raccord en T, constitué par une enveloppe métallique simple, est monté entre trois éléments de conduites linéaires pour raccorder de manière hydraulique ces éléments. Le raccord en T est connecté respectivement à un premier élément de conduite double-enveloppe et à un deuxième élément de conduite double-enveloppe contenant chacun une ligne de chauffage électrique.

Puis, un matériau isolant résistant à l'eau est coulé autour de l'enveloppe métallique du raccord. Une ligne électrique de liaison est par ailleurs disposée dans l'étendue d'eau autour du raccord pour raccorder électriquement les lignes de chauffage électrique des éléments de conduites montés sur le raccord.

Un tel raccord ne donne pas entière satisfaction. Le matériau isolant entourant le raccord fournit une isolation thermique inférieure à celle d'un matériau isolant contenu dans une double enveloppe d'un élément de conduite linéaire. Un point froid est donc susceptible d'apparaître au niveau du raccord.

Par ailleurs, la ligne électrique de liaison est connectée aux lignes de chauffage en milieu humide, directement dans l'étendue d'eau. Une dégradation de la connexion électrique, voire des courts-circuits sont susceptibles d'apparaître.

Un but de l'invention est donc de fournir un raccord intermédiaire de connexion de conduites rigides qui permette une extraction fiable des fluides qui le traversent, tout en assurant les connexions fluidiques désirées.

À cet effet, l'invention a pour objet un réseau selon la revendication 1.

Le réseau selon l'invention peut comprendre l'une ou plusieurs des caractéristiques des revendications 2 à 11, prises isolément ou suivant toute combinaison techniquement possible.

L'invention a en outre pour objet un procédé d'assemblage d'un réseau de conduites de transport de fluide sous une étendue d'eau, selon la revendication 12.

L'invention a également pour objet une méthode de convoyage de fluide à travers une étendue d'eau comprenant les étapes suivantes :
- fourniture d'un réseau de conduites tel que défini plus haut ;
- circulation de fluide provenant d'un premier élément de conduite rigide à travers le raccord vers l'un ou/et l'autre du deuxième élément de conduite rigide et du troisième élément de conduite rigide;
- chauffage du fluide circulant à travers le raccord par la ligne électrique de liaison.

L'invention sera mieux comprise à la lecture de la description qui va suivre, donnée uniquement à titre d'exemple, et faite en se référant aux dessins annexés, sur lesquels :
- la figure 1 est une vue schématique de dessus d'un premier réseau de conduites de transport de fluide immergé dans une étendue d'eau comprenant un raccord intermédiaire de connexion selon l'invention;
- la figure 2 est une vue schématique, prise en coupe suivant un plan médian, d'un détail marqué II sur la figure 1, illustrant le raccord intermédiaire et les éléments de conduite auxquels il est raccordé ;
- la figure 3 est une vue schématique analogue à la figure 2 du raccord intermédiaire selon l'invention, avant son assemblage.

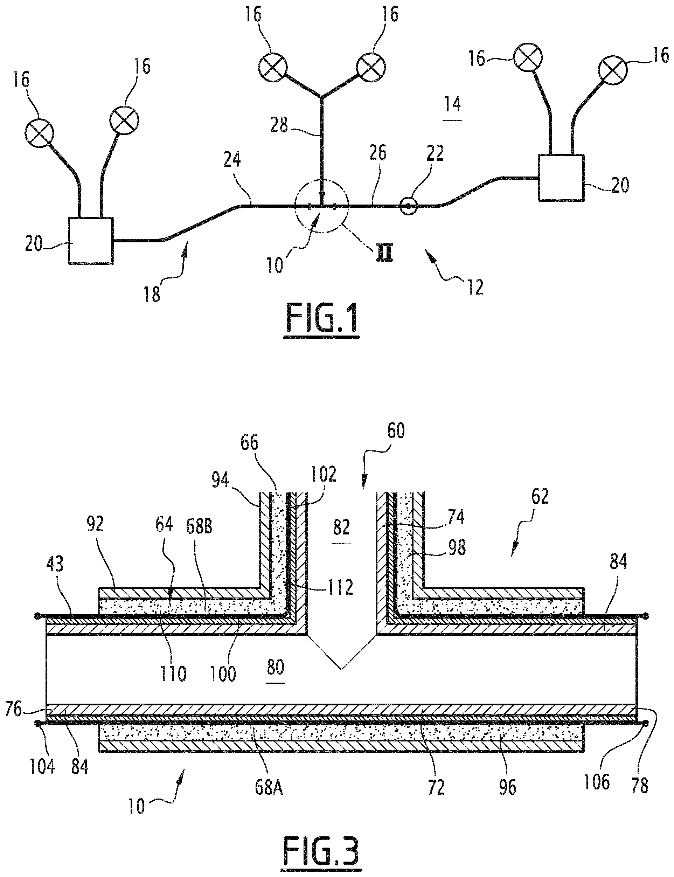

Un premier raccord intermédiaire 10 de connexion selon l'invention est illustré schématiquement sur les figures 1 à 3.

Le raccord intermédiaire 10 est destiné à être monté dans une installation 12 d'exploitation et de transport de fluide à travers une étendue d'eau 14, représentée en vue de dessus sur la figure 1.

L'étendue d'eau 14 est par exemple une mer, un océan, un lac. La profondeur de l'étendue d'eau 14 est généralement supérieure à 100 m et est par exemple comprise entre 1000 m et 4000 m.

Dans l'exemple de la figure 1, l'installation 12 comporte une pluralité de puits 16 ménagés dans le fond de l'étendue d'eau 14 pour prélever du fluide.

Le fluide prélevé et convoyé dans l'installation 12 est avantageusement un hydrocarbure tel que du pétrole ou du gaz naturel.

L'installation 12 comprend un réseau 18 de conduites rigides posées sur le fond de l'étendue d'eau 14, des éléments 20 de raccordement et de collecte de fluide, tels que des collecteurs d'extrémité de pipelines (désignés par le terme anglais «pipeline end terminations » ou « PLET ») et au moins une colonne montante 22 (ou « riser »), destinée à convoyer le fluide circulant dans le réseau 18 vers la surface de l'étendue d'eau 14.

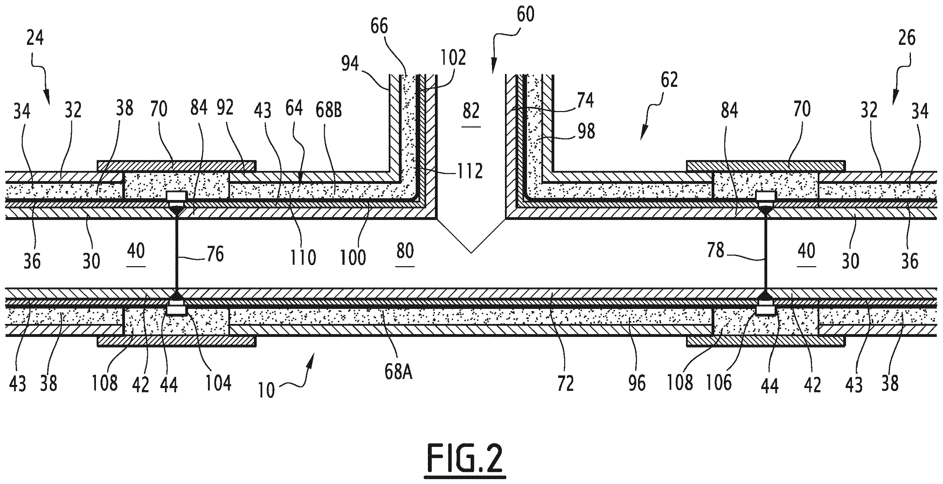

Comme illustré par les figures 1 et 2, le réseau 18 comporte un premier élément 24 de conduite rigide de transport de fluide, un deuxième élément 26 de conduite rigide de transport de fluide, et un troisième élément 28 de conduite rigide de transport de fluide, les éléments 24 à 28 étant raccordés entre eux par un raccord 10 selon l'invention.

Les éléments 26 à 28 de conduite rigide présentent des structures analogues. En référence à la Figure 2, chaque élément 26 à 28 présente ainsi un tube intérieur métallique 30 destiné au guidage du fluide, un tube extérieur métallique 32 délimitant, avec le tube intérieur 30, un espace intermédiaire 34, et une couche d'isolation thermique 36 disposée dans l'espace intermédiaire 34.

Chaque élément de conduite 26 à 28 comporte en outre au moins une ligne électrique 38 destinée au chauffage du fluide circulant à travers le tube intérieur 30, la ligne 38 étant reçue dans l'espace intermédiaire 34.

Le tube intérieur métallique 30 délimite une lumière centrale 40 de circulation de fluide qui débouche à chaque extrémité du tube 30. Au voisinage du raccord à 10, le tube 30 présente une région 42 en saillie en dehors du tube extérieur 32.

Le tube intérieur 30 présente par exemple un diamètre extérieur compris entre 10 cm et 100 cm.

La couche d'isolation thermique 36 remplit sensiblement totalement l'espace intermédiaire 34. Elle est par exemple formée par un aérogel. Elle présente un coefficient de transfert thermique global (désigné par l'acronyme anglais «OHTC ») par exemple inférieur à 1 W/m²K.

La ligne électrique 38 est propre à réaliser un traçage électrique chauffant sur le tube intérieur 30, à l'extérieur du tube 30. Elle est placée en contact thermique avec la surface extérieure du tube intérieur 30, soit en étant directement posée contre la surface, soit en étant posée sur une couche de protection 43 de la surface extérieure telle qu'une couche d'epoxy lié par fusion.

La ligne électrique 38 est par exemple réalisée par un cordon de câbles ou fils conducteurs reçus dans une gaine métallique.

Elle présente par exemple une section transversale allongée avec une largeur supérieure à son épaisseur.

La ligne électrique 38 présente avantageusement, au voisinage du raccord 10, une extrémité de connexion électrique 44 faisant saillie hors de l'espace intermédiaire 34.

Le tube extérieur 32 entoure le tube intérieur 30 et la couche d'isolation thermique 36. Il présente généralement un diamètre extérieur compris entre 10 cm et 100 cm.

Comme illustré par les figures 2 et 3, le raccord 10 comporte une enveloppe intérieure métallique 60, destinée au guidage du fluide, et selon l'invention, une enveloppe extérieure métallique 62 entourant l'enveloppe intérieure 60 et délimitant, avec l'enveloppe intérieure 60, un espace intermédiaire continu 64.

Le raccord 10 comporte en outre une couche intermédiaire 66 d'isolation thermique et au moins une ligne 68A, 68B électrique de liaison, destinée au chauffage du fluide, la couche 66 et chaque ligne 68A, 68B étant reçues dans l'espace intermédiaire continu 64.

Dans l'exemple de la figure 2, le raccord 10 comprend en outre des capots 70 intermédiaires de protection, raccordant l'enveloppe extérieure 62 au tube extérieur 32 d'un élément de conduite adjacent 24, 26.

Le raccord 10 est de faible longueur. Il présente par exemple une longueur inférieure à 10 m.

L'enveloppe intérieure 60 est de préférence réalisée d'un seul tenant en métal. Elle comprend un tronçon intérieur tubulaire 72 et au moins un branchement extérieur 74 tubulaire piqué sur le tronçon intérieur 72 entre les extrémités 76, 78 du tronçon intérieur 72.

Dans cet exemple, l'enveloppe intérieure 60 comporte un branchement extérieur unique 74. Elle présente ainsi une forme de générale de T. En variante (non représentée), elle présente une forme générale de Y, ou plusieurs branchements 74.

Le tronçon intérieur 72 présente un diamètre extérieur sensiblement égal au diamètre extérieur du tube intérieur 30 des éléments de conduite 24, 26 auxquels il est raccordé.

Il délimite un passage interne 80 de circulation de fluide débouchant extérieurement au niveau de la première extrémité 76 et de la deuxième extrémité 78.

Le branchement intérieur 74 est piqué sur le tronçon intérieur 72 entre la première extrémité 76 et la deuxième extrémité 78.

Il présente avantageusement un diamètre extérieur sensiblement égal au diamètre extérieur de l'élément de conduite 28 sur lequel il est raccordé.

Il définit intérieurement une lumière interne 82 de circulation de fluide débouchant dans le passage interne 80 entre les extrémités 76, 78.

Dans cet exemple, le tronçon intérieur 72 comporte une partie 84 en saillie hors de l'enveloppe extérieure 62 au niveau de chaque extrémité 78.

L'enveloppe extérieure 62 présente une forme analogue à celle de l'enveloppe intérieure 60.

Elle est disposée autour de l'enveloppe intérieure 60 pour recouvrir au moins partiellement cette enveloppe 60. L'enveloppe extérieure 62 délimite vers l'extérieur l'espace intermédiaire 64.

L'enveloppe extérieure 62 est réalisée d'un seul tenant en métal. Elle comporte un tronçon extérieur tubulaire 92 disposé autour du tronçon intérieur 72 et, pour chaque branchement intérieur 74, un branchement extérieur 94 piqué sur le tronçon extérieur 92.

Avantageusement, le tronçon extérieur 92 présente une longueur inférieure à celle du tronçon intérieur 72. Il couvre le tronçon intérieur 72 de part et d'autre du branchement 74.

Le tronçon extérieur 92 présente un diamètre extérieur sensiblement égal au diamètre extérieur du tube extérieur 32 de chaque élément de conduite 24, 26 sur lequel le raccord 10 est connecté.

Le branchement extérieur 94 est disposé autour du branchement intérieur 64.

L'enveloppe extérieure 62 présente ainsi une forme de générale de T. En variante, elle présente une forme générale de Y, ou plusieurs branchements 94 correspondant chacun à un branchement intérieur 74.

L'espace intermédiaire 64 comporte un premier volume intermédiaire annulaire 96 situé entre le tronçon intérieur 72 et le tronçon extérieur 92, et un deuxième volume intermédiaire 98 situé entre le branchement intérieur 74 et le branchement extérieur 94.

Selon l'invention, l'espace intermédiaire 64 est continu. Le deuxième volume intermédiaire 98 débouche dans le premier volume intermédiaire 96 entre le piquage du branchement intérieur 74 sur le tronçon intérieur 72 et le piquage du branchement extérieur 94 sur le tronçon extérieur 92.

Le raccord 10 est fixé sur le premier élément de conduite 24, par exemple par soudure, au niveau de la première extrémité 76. Il est fixé sur le deuxième élément de conduite 26, par exemple par soudure, au niveau de la deuxième extrémité 78.

Il est par ailleurs fixé sur le troisième élément de conduite 28.

En particulier, chaque région en saillie 42 d'un élément de conduite 24, 26 est assemblée sur une partie en saillie 84 du tronçon intérieur 72. Chaque lumière interne 40 d'un élément de conduite 24, 26 débouche alors dans le passage interne 80 et est raccordée hydrauliquement au troisième élément de conduite 28 par la lumière intérieure 82.

La couche isolation thermique 66 s'étend dans l'espace intermédiaire 64. Elle comporte une première partie 100 disposée dans le premier volume intérieur 96 et une deuxième partie 102 disposée dans le deuxième volume intérieur 98.

Avantageusement, la première partie 100 et la deuxième partie 102 sont raccordées entre elles pour assurer une isolation thermique continue dans le raccord 10.

De préférence, la couche d'isolation thermique 66 remplit sensiblement totalement, par exemple plus de 50 %, notamment plus de 90 % en volume l'espace intermédiaire 64.

La couche d'isolation thermique 66 étant contenue entre l'enveloppe extérieure 62 et l'enveloppe intérieure 60, elle n'est pas placée au contact de l'étendue d'eau 14 entourant le raccord 10. Elle comprend par exemple un aérogel.

Elle présente ainsi un coefficient de transfert thermique global (désigné par l'acronyme anglais «OHTC ») par exemple inférieur à 1 W/m²K.

Le raccord 10 ne constitue donc pas un point froid dans le réseau de conduite 18.

Dans cet exemple, le raccord 10 comporte une première ligne électrique 68A de chauffage du fluide s'étendant à travers le premier volume intérieur 96 entre le tronçon intérieur 72 et le tronçon extérieur 92.

Le raccord 10 présente avantageusement une deuxième ligne électrique 68B de chauffage du fluide s'étendant en partie dans le premier volume intérieur 96 et en partie dans le deuxième volume intérieur 98.

Chaque ligne électrique 68A, 68B est par exemple est propre à réaliser un traçage électrique chauffant sur l'enveloppe intérieure 60, à l'extérieur de l'enveloppe intérieure 60. Elle est placée en contact thermique avec la surface extérieure de l'enveloppe intérieure 60, soit en étant directement posée contre la surface, soit en étant posée sur une couche de protection 43 de la surface extérieure telle qu'une couche d'epoxy lié par fusion.

La ligne électrique 68A, 68B est par exemple réalisée par un cordon de câbles ou fils conducteurs reçus dans une gaine métallique.

Elle présente par exemple une section transversale allongée avec une largeur supérieure à son épaisseur.

En référence aux figures 2 et 3, la première ligne électrique 68A présente dans cet exemple une première extrémité de connexion électrique 104 située au voisinage de la première extrémité 76, avantageusement hors de l'enveloppe extérieure 62 et une deuxième extrémité de connexion électrique 106, située au voisinage de la deuxième extrémité 78, avantageusement hors de l'enveloppe extérieure 62.

Comme illustré par la figure 2, l'extrémité 44 de la ligne électrique 38 du premier élément de conduite 24 est raccordée à la première extrémité 104, de préférence par sertissage.

L'extrémité 44 de la ligne électrique 38 du deuxième élément de conduite 26 est raccordée à la deuxième extrémité de connexion 106, de préférence par sertissage.

Ainsi, la ligne électrique 68A de liaison raccorde électriquement la ligne électrique 38 du deuxième élément de conduite 26, à la ligne électrique 38 du premier élément de conduite 24, dans l'espace intermédiaire 64, sans être en contact avec l'étendue d'eau 14.

Ceci permet de réaliser des connexions électriques à sec entre les lignes 38, 68A, ce qui augmente la fiabilité du chauffage du fluide traversant le réseau 18.

En outre, les lignes 38, 68A peuvent être raccordés électriquement par un simple sertissage, sans avoir à réaliser de soudure résistante en milieu humide.

Comme illustré par la figure 3, la deuxième ligne électrique 68B comprend un premier segment de ligne 110 s'étendant en regard du tronçon intérieur 72 dans le premier volume 100 et un deuxième segment de ligne 112 s'étendant en regard du branchement intérieur 74 dans le deuxième volume intérieur 102.

La deuxième ligne électrique 68B est donc propre à raccorder électriquement une ligne électrique 38 contenue dans l'un du premier élément de conduite 24 et du deuxième élément de conduite 26 avec une ligne électrique contenue dans le troisième élément de conduite 28.

Chaque capot 70 est disposé autour des parties en saillie 42, 84, en appui entre le tube externe 32 et l'enveloppe extérieure 62. Le capot 70 et par exemple formé par deux demi-coquilles assemblées l'une sur l'autre. Un manchon 108 d'isolation thermique est disposé dans le volume intermédiaire délimité entre les parties en saillie 42, 84 et le capot 70.

Un procédé d'assemblage du réseau de conduites 18 selon l'invention va maintenant être décrit.

Ce procédé d'assemblage est par exemple mis en oeuvre à terre, ou sur un navire de pose, à la surface de l'étendue d'eau 14. En variante, ce procédé est mis en oeuvre directement sous l'étendue d'eau 14, en utilisant une chambre hyperbare.

Initialement, le raccord 10, un premier élément de conduite 24 et un deuxième élément de conduite 26 sont fournis.

Pour chaque extrémité 76, 78 du raccord 10, les parties en saillie 42, 84 découvertes sont mises bout à bout et sont fixés l'une sur l'autre, par exemple par soudure.

Puis, l'extrémité de connexion électrique 44 de la ligne 38 est raccordée électriquement à une extrémité 104, 106 de connexion électrique de la ligne de liaison 68A, par exemple en regard des parties en saillie 42, 84.

Ensuite, le manchon d'isolation thermique 108 est formé autour des parties en saillie 42, 84. Le capot 70 est alors mis en place autour du manchon 108 en appui sur le tube externe 32 et sur l'enveloppe extérieure 62.

Ensuite, un troisième élément de conduite 28 est connecté au branchement 74 du raccord 10, soit directement comme décrit précédemment, soit par l'intermédiaire d'une vanne.

Le réseau de conduites 18 est alors propre à être utilisé. Les lignes de chauffage 38 sont alimentées électriquement, et sont raccordées l'une à l'autre par la ligne intermédiaire 68A. Le fluide s'écoulant dans les lumières 40 et dans le passage interne 80 est donc réchauffé par l'intermédiaire respectivement des lignes 38 et de la ligne 68A, ce qui diminue sa viscosité, et évite la formation de bouchons.

Grâce au raccord 10 selon l'invention, il est possible de raccorder entre eux au moins trois éléments de conduite tubulaire 24, 26, 28, sans créer un point froid au niveau du raccord 10.

La structure en double enveloppe du raccord 10 étant analogue à celle des éléments de conduite 24, 26, 28, il est simple de connecter le raccord 10 sur les éléments conduites 24, 26, 28. Cette structure permet d'utiliser des isolants thermiques de bonne qualité dans le raccord 10, et de prévoir des lignes de chauffage 68A, 68B à travers le raccord 10, sans contact avec l'étendue d'eau 14. Les connexions électriques sont donc effectuées à sec, par exemple par un simple sertissage.

## Revendications

1. Réseau (18) de conduites de transport de fluide, destiné à être immergé dans une étendue d'eau (14), comprenant :
- un raccord intermédiaire (10) de connexion d'éléments (24, 26, 28) de conduite rigide de transport de fluide, destiné à être immergé dans une étendue d'eau (14), comprenant :
• une enveloppe intérieure (60) rigide, comprenant
* un tronçon intérieur (72), le tronçon intérieur (72) délimitant un passage interne (80) de circulation de fluide entre une première extrémité (76) et une deuxième extrémité (78),
* au moins un branchement intérieur (74) piqué sur le tronçon intérieur (72) entre la première extrémité (76) et la deuxième extrémité (78), le branchement intérieur (74) délimitant une lumière interne (82) de circulation de fluide débouchant dans le passage interne (80) ;
• au moins une ligne électrique de liaison (68A, 68B) étant disposée à l'extérieur de l'enveloppe intérieure (60), la ligne électrique (68A, 68B) présentant un premier point de connexion électrique situé d'un premier côté du branchement intérieur (74), et un deuxième point de connexion électrique situé d'un deuxième côté du branchement intérieur (74),
le raccord (10) comportant une enveloppe extérieure rigide (62) disposée autour de l'enveloppe intérieure (60), l'enveloppe extérieure (62) couvrant au moins partiellement le tronçon intérieur (72) de part et d'autre du branchement intérieur (74), et le branchement intérieur (74), l'enveloppe extérieure (62) et l'enveloppe intérieure (60) délimitant entre elles un espace intermédiaire (64) s'étendant autour du tronçon intérieur (72) et du branchement intérieur (74), la ligne électrique (68A, 68B) étant reçue dans l'espace intermédiaire (60), le raccord (10) comportant une couche (66) d'isolation thermique disposée dans l'espace intermédiaire (64) en regard du tronçon intérieur (72) et en regard du branchement intérieur (74);
- un premier élément (24) de conduite rigide de transport de fluide, raccordé à la première extrémité (76) du tronçon intérieur (72) ;
- un deuxième élément (26) de conduite rigide de transport de fluide, raccordé à la deuxième extrémité (78) du tronçon intérieur (72) ;
- un troisième élément (28) de conduite rigide de transport de fluide raccordé au branchement intérieur (74) ;
le premier élément de conduite rigide (24) et le deuxième élément de conduite rigide (26) comprenant chacun un tube intérieur (30) de guidage de fluide raccordé au tronçon intérieur (72) et un tube extérieur (32) délimitant un espace annulaire (34) avec le tube intérieur (30), l'espace annulaire (34) recevant une couche (36) d'isolation thermique et au moins une ligne électrique (38) destinée au chauffage du fluide contenu dans le tube intérieur (30), les lignes électriques (38) du premier élément de conduite rigide (24) et du deuxième élément de conduite rigide (26) étant raccordées électriquement entre elles par la ligne électrique de liaison (68A, 68B),
**caractérisé en ce que**
la ligne électrique (68A, 68B) est destinée au chauffage du fluide circulant dans l'enveloppe intérieure (60) du raccord intermédiaire de connexion,
la ligne électrique (68A, 68B) étant placée en contact thermique avec l'enveloppe intérieure (60) du raccord intermédiaire de connexion pour chauffer le fluide contenu dans le passage interne (80).

2. Réseau (18) selon la revendication 1, **caractérisé en ce que** le raccord (10) comporte une ligne électrique additionnelle (68B) disposée dans l'espace intermédiaire (64), la ligne électrique additionnelle (68B) présentant un premier segment de ligne (110) s'étendant en regard du tronçon intérieur (72) et un deuxième segment de ligne (112) s'étendant en regard du branchement intérieur (74).

3. Réseau (18) selon la revendication 1 ou 2, **caractérisé en ce que** la couche d'isolation thermique (66) remplit sensiblement totalement l'espace intermédiaire (64).

4. Réseau (18) selon l'une quelconque des revendications précédentes, **caractérisé en ce que** la couche d'isolation thermique (66) comporte un aérogel.

5. Réseau (18) selon l'une quelconque des revendications précédentes, **caractérisé en ce que** le tronçon intérieur (72) présente une partie en saillie (84) hors de l'enveloppe extérieure (62) au niveau d'au moins une de la première extrémité (76) et de la deuxième extrémité (78), et **en ce qu'**il comporte éventuellement, pour la ou chaque partie en saillie (84), un capot (70) rapporté sur l'enveloppe extérieure (62) pour couvrir la partie en saillie (84).

6. Réseau (18) selon l'une quelconque des revendications précédentes, **caractérisé en ce que** la longueur du tronçon intérieur (72) est inférieure à 10 m.

7. Réseau (18) selon l'une quelconque des revendications précédentes, **caractérisé en ce que** l'enveloppe intérieure (60) est réalisée d'un seul tenant, l'enveloppe extérieure (62) étant avantageusement réalisée d'un seul tenant.

8. Réseau (18) selon l'une quelconque des revendications précédentes, **caractérisé en ce que** l'enveloppe (62) extérieure comprend un tronçon extérieur (92) recouvrant au moins en partie le tronçon intérieur (72) de part et d'autre du branchement intérieur (74) et un branchement extérieur (94) piqué sur le tronçon extérieur (92) et recouvrant au moins en partie le branchement intérieur (74), le volume intermédiaire (96) délimité entre le tronçon intérieur (72) et le tronçon extérieur (92) communiquant avec le volume intermédiaire (98) délimité entre le branchement intérieur (74) et le branchement extérieur (94).

9. Réseau (18) selon l'une quelconque des revendications précédentes, **caractérisé en ce que** l'enveloppe extérieure (62) présente une forme analogue à celle de l'enveloppe intérieure (60).

10. Réseau (18) selon l'une quelconque des revendications précédentes, **caractérisé en ce que** l'enveloppe extérieure (62) est réalisée d'un seul tenant en métal.

11. Réseau (18) selon l'une quelconque des revendications précédentes, **caractérisé en ce que** le tronçon intérieur (72) présente une partie en saillie (84) hors de l'enveloppe extérieure (62) au niveau d'au moins une de la première extrémité (76) et de la deuxième extrémité (78), le raccord (10) comportant un capot (70) raccordé à l'enveloppe extérieure (62) et au tube extérieur (32) pour couvrir la partie en saillie (84), la connexion électrique entre d'une part, la ligne électrique (38) présente dans l'un au moins du premier élément de conduite rigide (24) et du deuxième élément de conduite rigide (26) et d'autre part, la ligne électrique (68A) de liaison étant éventuellement disposée entre la partie en saillie (84) et le capot (70).

12. Procédé d'assemblage d'un réseau (18), selon l'une quelconque des revendications 1 à 11, de conduites de transport de fluide sous une étendue d'eau (14), comprenant les étapes suivantes :
- fourniture d'un raccord (10) ;
- fixation d'un premier élément de conduite rigide (24) à une première extrémité (76) du tronçon intérieur (72) ;
- fixation d'un deuxième élément de conduite rigide (26) à une deuxième extrémité (78) du tronçon intérieur (72) ;
- connexion d'un troisième élément de conduite rigide (28) au branchement intérieur (74) ;
- raccordement électrique entre au moins une première ligne électrique (38) destinée au chauffage du fluide présent dans le premier élément de conduite rigide (24), et la ligne électrique de liaison (68A) présente dans le raccord (10) ;
- raccordement électrique entre au moins une deuxième ligne électrique (38) destinée au chauffage du fluide présent dans le deuxième élément de conduite rigide (26) et la ligne électrique de liaison (68A) présente dans le raccord (10).

## Patentansprüche

1. Netz (18) von Leitungen zum Fluidtransport, dazu bestimmt, in ein Gewässer (14) getaucht zu werden, umfassend:
- einen Zwischenanschluss (10) zur Verbindung von Elementen (24, 26, 28) einer starren Leitung zum Fluidtransport, dazu bestimmt, in ein Gewässer (14) getaucht zu werden, umfassend:
• eine starre innere Hülle (60), umfassend
* einen Innenabschnitt (72), wobei der Innenabschnitt (72) einen inneren Durchgang (80) zur Fluidzirkulation zwischen einem ersten Ende (76) und einem zweiten Ende (78) begrenzt.
* mindestens einen Innenanschluss (74), der auf dem Innenabschnitt (72) zwischen dem ersten Ende (76) und dem zweiten Ende (78) aufgenäht ist, wobei der Innenanschluss (74) einen inneren Hohlraum (82) zur Fluidzirkulation, der in den inneren Durchgang (80) mündet, begrenzt;
• mindestens eine elektrische Verbindungsleitung (68A, 68B), die außen an der inneren Hülle (60) angebracht ist, wobei die elektrische Leitung (68A, 68B) einen ersten elektrischen Verbindungspunkt aufweist, der sich an einer ersten Seite des Innenanschlusses (74) befindet, und einen zweiten elektrischen Verbindungspunkt, der sich an einer zweiten Seite des Innenanschlusses (74) befindet,
wobei der Anschluss (10) eine starre äußere Hülle (62) umfasst, die rund um die innere Hülle (60) angeordnet ist, wobei die äußere Hülle (62) mindestens teilweise den Innenabschnitt (72) zu beiden Seiten des Innenanschlusses (74) bedeckt, und den Innenanschluss (74), wobei die äußere Hülle (62) und die innere Hülle (60) zwischen sich einen Zwischenraum (64) begrenzen, der sich rund um den Innenabschnitt (72) und den Innenanschluss (74) erstreckt, wobei die elektrische Leitung in dem Zwischenraum (60) aufgenommen wird, wobei der Anschluss (10) eine wärmeisolierende Schicht (66) umfasst, die in dem Zwischenraum (64) zugewandt dem Innenabschnitt (72) und zugewandt dem Innenanschluss (74) angeordnet ist,
- ein erstes Element (24) einer starren Leitung zum Fluidtransport, das an dem ersten Ende (76) des Innenabschnitts (72) angeschlossen ist;
- ein zweites Element (26) einer starren Leitung zum Fluidtransport, das an dem zweiten Ende (78) des Innenabschnitts (72) angeschlossen ist;
- ein drittes Element (28) einer starren Leitung zum Fluidtransport, das an dem Innenanschluss (74) angeschlossen ist;
wobei das erste Element einer starren Leitung (24) und das zweite Element einer starren Leitung (26) jedes ein Innenrohr (30) zur Fluidleitung umfassen, das an den Innenabschnitt (72) angeschlossen ist, und ein Außenrohr (32), das einen Ringraum (34) mit dem Innenrohr (30) begrenzt, wobei der Ringraum (34) eine wärmeisolierende Schicht (36) aufnimmt und mindestens eine elektrische Leitung (38), die dazu bestimmt ist, das Fluid zu erwärmen, das im Innenrohr (30) enthalten ist, wobei die elektrischen Leitungen (38) des ersten Elements einer starren Leitung (24) und des zweiten Elements einer starren Leitung (26) durch die elektrische Verbindungsleitung (68A, 68B) miteinander elektrisch verbunden sind,
**dadurch gekennzeichnet, dass**
die elektrische Leitung (68A, 68B) dazu bestimmt ist, das Fluid zu erwärmen, das in der inneren Hülle (60) des Verbindungszwischenanschlusses zirkuliert,
wobei die elektrische Leitung (68A, 68B) in Wärmekontakt mit der inneren Hülle (60) des Verbindungszwischenanschlusses platziert ist, um das in dem inneren Durchgang (80) enthaltene Fluid zu erwärmen.

2. Netz (18) nach Anspruch 1, **dadurch gekennzeichnet, dass** der Anschluss (10) eine zusätzliche elektrische Leitung (68B) umfasst, die im Zwischenraum (64) angeordnet ist, wobei die zusätzliche elektrische Leitung (68B) ein erstes Leitungssegment (110) aufweist, das sich dem Innenabschnitt (72) zugewandt erstreckt, und ein zweites Leitungssegment (112), das sich dem Innenanschluss (74) zugewandt erstreckt.

3. Netz (18) nach Anspruch 1 oder 2, **dadurch gekennzeichnet, dass** die wärmeisolierende Schicht (66) den Zwischenraum (64) im Wesentlichen vollständig ausfüllt.

4. Netz (18) nach einem der vorstehenden Ansprüche, **dadurch gekennzeichnet, dass** die wärmeisolierende Schicht (66) ein Aerogel enthält.

5. Netz (18) nach einem der vorstehenden Ansprüche, **dadurch gekennzeichnet, dass** der Innenabschnitt (72) einen aus der äußeren Hülle (62) hervorstehenden Teil (84) an mindestens einem des ersten Endes (76) und des zweiten Endes (78) aufweist, und dadurch, dass es eventuell, für den oder jeden hervorstehenden Teil (84) eine Abdeckung (70) umfasst, die auf der äußeren Hülle (62) angebracht ist, um den hervorstehenden Teil (84) zu bedecken.

6. Netz (18) nach einem der vorstehenden Ansprüche, **dadurch gekennzeichnet, dass** die Länge des Innenabschnitts (72) weniger als 10 m beträgt.

7. Netz (18) nach einem der vorstehenden Ansprüche, **dadurch gekennzeichnet, dass** die innere Hülle (60) in einem Stück gebildet ist, wobei die äußere Hülle (62) bevorzugt in einem Stück gebildet ist.

8. Netz (18) nach einem der vorstehenden Ansprüche, **dadurch gekennzeichnet, dass** die äußere Hülle (62) einen Außenabschnitt (92) umfasst, der mindestens teilweise den Innenabschnitt (72) zu beiden Seiten des Innenanschlusses (74) bedeckt, und einen Außenanschluss (94), der auf dem Außenabschnitt (92) aufgenäht ist und mindestens teilweise den Innenanschluss (74) bedeckt, wobei der zwischen dem Innenabschnitt (72) und dem Außenabschnitt (92) begrenzte Zwischenraum (96) mit dem zwischen dem Innenanschluss (74) und dem Außenanschluss (94) begrenzten Zwischenraum (98) in Verbindung steht.

9. Netz (18) nach einem der vorstehenden Ansprüche, **dadurch gekennzeichnet, dass** die äußere Hülle (62) eine Form aufweist, die analog zu jener der inneren Hülle (60) ist.

10. Netz (18) nach einem der vorstehenden Ansprüche, **dadurch gekennzeichnet, dass** die äußere Hülle (62) in einem Stück aus Metall gebildet ist.

11. Netz (18) nach einem der vorstehenden Ansprüche, **dadurch gekennzeichnet, dass** der Innenabschnitt (72) einen aus der äußeren Hülle (62) hervorstehenden Teil (84) an mindestens einem des ersten Endes (76) und des zweiten Endes (78) aufweist, wobei der Anschluss (10) eine Abdeckung (70) umfasst, die an der äußeren Hülle (62) und an dem Außenrohr (32) angebracht ist, um den hervorstehenden Teil (84) zu bedecken, wobei die elektrische Verbindung zwischen der in mindestens einem des ersten Elements einer starren Leitung (24) und des zweiten Elements zur starren Leitung (26) vorhandenen elektrischen Leitung (38) einerseits und der elektrischen Verbindungsleitung (68A) andererseits eventuell zwischen dem hervorstehenden Teil (84) und der Abdeckung (70) angeordnet ist.

12. Verfahren zur Montage eines Netzes (18) nach einem der Ansprüche 1 bis 11, von Leitungen zum Fluidtransport unter einem Gewässer (14), das die folgenden Schritte umfasst:
- Lieferung eines Anschlusses (10);
- Befestigung eines ersten Elements einer starren Leitung (24) an einem ersten Ende (76) des Innenabschnitts (72);
- Befestigung eines zweiten Elements einer starren Leitung (26) an einem zweiten Ende (78) des Innenabschnitts (72);
- Verbindung eines dritten Elements einer starren Leitung (28) mit dem Innenanschluss (74);
- elektrische Anbindung zwischen mindestens einer ersten elektrischen Leitung (38), die dazu bestimmt ist, das im ersten Element einer starren Leitung (24) vorhandene Fluid zu erwärmen, und der im Anschluss (10) vorhandenen elektrischen Verbindungsleitung (68A) ;
- elektrische Anbindung zwischen mindestens einer zweiten elektrischen Leitung (38), die dazu bestimmt ist, das in einem zweiten Element einer starren Leitung (26) vorhandene Fluid zu erwärmen, und der elektrischen Verbindungslinie (68A), die in dem Anschluss (10) vorhanden ist.

## Claims

1. A pipe network (18) for conveying a fluid, designed to be submerged in an expanse of water (14), comprising:
- an intermediate coupling (10) for connecting rigid pipe elements (24, 26, 28) for conveying a fluid, designed to be submerged in an expanse of water (14), comprising:
• an inner rigid shell (60), comprising:
* an inner section (72), the inner section (72) delimiting an inner passage (80) for a flow of fluid between a first end (76) and a second end (78),
* at least one inner branch (74) tapped on the inner section (72) between the first end (76) and the second end (78), the inner branch (74) delimiting an inner aperture (82) for a fluid flow emerging in the inner passage (80);
• at least one electric connecting line (68A, 68B) positioned outside the inner shell (60), the electric line (68A, 68B) having a first electrical connecting point situated on a first side of the inner branch (74), and a second electrical connecting point situated on a second side of the inner branch (74),
the coupling (10) comprising a rigid outer shell (62) positioned around the inner shell (60), the outer shell (62) at least partially covering the inner section (72) on either side of the inner branch (74), and the inner branch (74), the outer shell (62) and the inner shell (60) delimiting an intermediate space (64) between them extending around the inner section (72) and the inner branch (74), the electric line (68A, 68B) being received in the intermediate space (60), the coupling (10) comprising a thermally insulating layer (66) positioned in the intermediate space (64) across from the inner section (72) and across from the inner branch (74);
- a first rigid pipe element (24) for conveying a fluid, coupled to the first end (76) of the inner section (72);
- a second rigid pipe element (26) for conveying a fluid, coupled to the second end (78) of the inner section (72);
- a third rigid pipe element (28) for conveying a fluid coupled to the inner branch (74);
the first rigid pipe element (24) and the second rigid pipe element (26) each comprising an inner fluid guide tube (30) coupled to the inner section (72) and an outer tube (32) delimiting an annular space (34) with the inner tube (30), the annular space (34) receiving a thermally insulating layer (36) and at least one electric line (38) designed to heat the fluid contained in the inner tube (30), the electric lines (38) of the first rigid pipe element (24) and the second rigid pipe element (26) being electrically coupled to each other by the electric connecting line (68A, 68B),
**characterized in that** the electric line (68A, 68B) is intended to heat the fluid flowing in the inner shell (60) of the intermediate coupling,
the electric line (68A, 68B) being placed in thermal contact with the inner shell (60) to heat the fluid contained in the inner passage (80).

2. The network (18) according to claim 1, **characterized in that** the coupling (10) comprises an additional electric line (68B) positioned in the intermediate space (64), the additional electric line (68B) having a first line segment (110) extending across from the inner section (72) and a second line segment (112) extending across from the inner branch (74).

3. The network (18) according to claim 1 or 2, **characterized in that** the thermally insulating layer (66) fills substantially all of the intermediate space (64).

4. The network (18) according to any one of the preceding claims, **characterized in that** the thermally insulating layer (66) comprises an aerogel.

5. The network (18) according to any one of the preceding claims, **characterized in that** the inner section (72) has a part (84) protruding outside the outer shell (62) at least at one of the first end (76) and the second end (78), and **in that** it possibly comprises, for the or each protruding part (84), a cover (70) attached on the outer shell (62) to cover the protruding part (84).

6. The network (18) according to any one of the preceding claims, **characterized in that** the length of the inner section (72) is shorter than 10 m.

7. The network (18) according to any one of the preceding claims, **characterized in that** the inner shell (60) is made in a single piece, the outer shell (62) advantageously being made in a single piece.

8. The network (18) according to any one of the preceding claims, **characterized in that** the outer shell (62) comprises an outer section (92) at least partially covering the inner section (72) on either side of the inner branch (74) and an outer branch (94) tapped on the outer section (92) and at least partially covering the inner branch (74), the intermediate volume (96) delimited between the inner section (72) and the outer section (92) communicating with the intermediate volume (98) delimited between the inner branch (74) and the outer branch (94).

9. The network (18) according to any one of the preceding claims, **characterized in that** the outer shell (62) has a shape similar to that of the inner shell (60).

10. The network (18) according to any one of the preceding claims, **characterized in that** the outer shell (62) is made in a single piece from metal.

11. The network (18) according to any one of the preceding claims, **characterized in that** the inner section (72) has a part (84) protruding outside the outer shell (62) at least at one of the first end (76) and the second end (78), the coupling (10) comprising a cover (70) coupled to the outer shell (62) and the outer tube (32) to cover the protruding part (84), the electric connection between the electric line (38) present in at least one of the first rigid pipe element (24) and the second rigid pipe element (26), on the one hand, and the electric connecting line (68A), on the other hand, being possibly positioned between the protruding part (84) and the cover (70).

12. A method for assembling a pipe network (18) according to any one of claims 1 to 11 for conveying a fluid below an expanse of water (14), comprising the following steps:
- providing a coupling (10);
- fastening a first rigid pipe element (24) to a first end (76) of the inner section (72);
- fastening a second rigid pipe element (26) to a second end (78) of the inner section (72);
- connecting a third rigid pipe element (28) to the inner branch (74);
- electrical coupling between at least one first electric line (38) designed to heat the fluid present in the first rigid pipe element (24), and the electric connecting line (68A) present in the coupling (10);
- electrical coupling between at least one second electric line (38) designed to heat the fluid present in the second rigid pipe element (26), and the electric connecting line (68A) present in the coupling (10).
